# EUROPEAN PATENT SPECIFICATION

(11) **EP 4 730 223 B1**
(45) Date of publication and mention of the grant of the patent: **26.08.2026**
(21) Application number: 24383155.9
(22) Date of filing: 21.10.2024
(51) Int. Cl.: G06Q 10/04, G06Q 50/26, G01N 15/06

(54) **METHOD FOR TRAINING AT LEAST ONE MACHINE LEARNING MODEL THAT IS USABLE FOR ESTIMATING THE IMMISSION OF PARTICLES AT AT LEAST ONE LOCATION, AND SYSTEM**
VERFAHREN UND SYSTEM ZUM TRAINIEREN MINDESTENS EINES MASCHINENLERNMODELLS ZUR SCHÄTZUNG DER IMMISSION VON PARTIKELN AN MINDESTENS EINEM STANDORT
PROCÉDÉ ET SYSTÈME D'APPRENTISSAGE D'AU MOINS UN MODÈLE D'APPRENTISSAGE MACHINE QUI EST UTILISABLE POUR ESTIMER L'IMMISSION DE PARTICULES AU MOINS À UN EMPLACEMENT

(43) Date of publication of application: 22.04.2026
(73) Proprietor: Fundación Tecnalia Research & Innovation, 20009 San Sebastián, Guipúzcoa (ES)
(72) Inventor: AROSTEGI PÉREZ, María, Bilbao (ES); ARANGUREN UBIERNA, Andoni, Sodupe (ES); SIMÓN MORAL, Andrés, Bilbao (ES); FERNÁNDEZ RODRIGO, José Germán, Bilbao (ES); ZAFRA PÉREZ, Adrián, Bilbao (ES); PADRÓ HERNÁNDEZ, Ales, Leioa (ES); GIL LÓPEZ, Sergio, Orozko (ES)
(74) Representative: Balder IP Law, S.L.

(56) References cited:
- EP-A1- 3 712 786
- US-A1- 2011 208 414
- US-A1- 2023 184 730
- US-A1- 2024 200 991
- SEYEDEHMEHRMANZAR SOHRAB ET AL: "Effect of geographical parameters on PM10 pollution in European landscapes: a machine learning algorithm-based analysis", ENVIRONMENTAL SCIENCES EUROPE, BIOMED CENTRAL LTD, LONDON, UK, vol. 36, no. 1, 30 August 2024 (2024-08-30), pages 1 - 19, XP021343047, DOI: 10.1186/S12302-024-00972-Z

## Description

### TECHNICAL FIELD

The present invention relates to a method for training at least one machine learning model that is usable for estimating the immission of particles at at least one location. The present invention also relates to a system for estimating the immission of particles at at least one location. The "immission of particles" may be an injection, arrival or impact of airborne particles at the at least one location, resulting to an increase of the concentration of the particles into the air (i.e. atmosphere) of the at least one location. These particles may originate from one or more particle emission sources i.e. sources which may emit the particles into the atmosphere. Hence, estimating the immission of the particles at the at least one location may preferably be estimating whether an emission of the particles from one or more particle emission sources may result to the immission (i.e. arrival or injection) of the particles at the at least one location. The particles may also be called "particulates".

### STATE OF THE ART

Measuring the immission, concentration or impact of atmospheric particles at a region can be important as it can provide valuable information regarding a possible air pollution at that region. Moreover, such measurements can be important in the context of studying, understanding or predicting the environmental impact of anthropogenic particle emission sources. Examples of such anthropogenic particle emission sources include industrial, commercial, construction or other human-made installations, machinery or sites from which particles may be emitted to the atmosphere and subsequently arrive to other locations.

There are known conventional methods and systems for measuring the impact or air quality levels at one or more locations of atmospheric particles originating from particle emission sources located close or further away from said one or more locations. Said known conventional methods and systems typically involve the deployment and the constant and simultaneous operation of a large number of detectors at both the locations where the particles are emitted and the locations where the particles may impact. However, said conventional methods and systems have the following drawbacks. The use of a large number of detectors, and the requirement for operating these detectors constantly and simultaneously renders the conventional methods and systems complex, expensive and energy consuming, and these factors may ultimately hinder the large-scale use of, and the quality of the measurements provided by, said conventional systems and methods. Hence, there is a need for overcoming at least some of the drawbacks of said conventional methods and systems.

US2023/184730A1 discloses generating a training data set for estimating immissions based on measured emissions considering meteorological conditions.

### DESCRIPTION OF THE INVENTION

The present invention allows for overcoming at least some of the drawbacks of said conventional systems and methods. In particular, the present invention allows for obtaining a system which may be advantageously used for accurately estimating the immission of particles at one or more locations, given some information related to meteorological conditions and the emission of the particles. Also, advantageously the present invention may advantageously allow for avoiding requiring the use of a large number of physical sensors for the creation and operation of a system that can be used for the estimation with a high confidence and spatial resolution of the immission of particles at different locations in an area. In addition, the present invention may advantageously allow for creating systems the quality and functionality of which may be progressively improved with time after their creation. Moreover, at least some embodiments of the present invention may allow for the use of few and relatively simple and low-cost detectors for obtaining high-quality estimations regarding the possible immission of particles in one or more locations. Hence, the present invention may advantageously allow for reducing the costs required for obtaining such high-quality estimations. Also, said high-quality estimations may advantageously be employed and utilized by the industry, the official authorities or others for the purpose of studying, understanding or predicting the impact that one or more human-made (i.e. created or caused by humans) particle emission sources may have to the quality of air at a number of regions located around, close or far from said sources. A first aspect of the invention concerns a method for training at least one machine learning model. A second aspect of the invention concerns a system for estimating the immission of particles at (in) at least one location. The system of the second aspect of the invention comprises a computing system which, as is explained further below, is configured to execute a number of machine learning models which have been trained with the method of the first aspect of the invention. Hence, it can be understood that a machine learning model that is trained with the method of the first aspect of the invention is usable, i.e. may be used, for estimating the immission of particles in at least one location.

Said method of the first aspect of the invention comprises defining M emission locations at respective regions from where there is possible emission of particles into the atmosphere, and N immission locations where there is possible immission of the particles, wherein each of M and N is a corresponding integer equal or greater than 1; during a period of time, in each of the M emission locations measuring with a corresponding detector located at the corresponding location whether there is emission of the particles from the respective region; during the period of time, in each of the N immission locations measuring with a corresponding detector located at the corresponding location whether there is immission of the particles; registering meteorological conditions occurring at each of the M emission locations during the period of time, wherein the meteorological conditions comprise a wind speed, a wind direction, a relative humidity, a temperature, a dew point and a pressure; for each combination of anyone of the N immission locations and anyone of the M emission locations forming a corresponding training dataset using data related to the registered meteorological conditions at the corresponding emission location and the measurements taken at the emission and immission locations of the corresponding combination, thereby generating a MxN number of training datasets; for each one of the generated datasets training via computing means a corresponding machine learning model using the corresponding training dataset, thereby generating a MxN number of trained machine learning models, wherein each of the machine learning models is configured to receive as input data related to the measurement of particles and the meteorological conditions at the corresponding emission location, and provide as output an estimation of whether there is immission of the particles at the corresponding immission location.

It may be understood that each of the machine learning models that is trained with the first method of the invention concerns a respective combination of one of the M emission locations and one of the N immission locations. For example, when said M emission locations consist of locations M₁, M₂...M_{M}, and said N immission locations consist of locations N₁, N₂,...N_{N}, then for the combination of locations M_{M} and N_{N}, there is a respective training dataset which can be named as "M_{M}N_{N} dataset" which can be used for training a corresponding machine learning model (MLM) which can be named as "M_{M}N_{N} MLM". The latter once trained with the method of the first aspect of the invention may be used for predicting whether an emission of particles from the M_{M} location will result to an immission or impact of the particles in the N_{N} location, provided that at least some meteorological conditions at the M_{M} location at the time of the emission are known. In at least some preferred embodiments of the invention, the prediction that may be achieved with a MLM trained with the method of the first aspect of the invention may be sufficiently accurate for allowing a user of the model to say with a high degree of confidence whether there is or will be particle immission at the MLM's respective immission location as a result of a particle emission at the MLM's respective emission location, without said user having to constantly use a particle detector at the immission location for which the prediction is made. Hence, with respect to the example concerning the aforementioned M_{M}N_{N} MLM, it can be understood that while a corresponding particle detector at the N_{N} immission location may be used for the purpose of creating the M_{M}N_{N} dataset that can be used for training the M_{M}N_{N} MLM, the presence of the particle detector at N_{N} is no longer required once the M_{M}N_{N} MLM has been created. Therefore, once M_{M}N_{N} MLM has been created, the particle detector that was used at the N_{N} for taking the respective measurements used for creating the M_{M}N_{N} MLM, may be moved to another immission location for the purpose of creating another training dataset and corresponding MLM. This advantageously allows for using a relatively small number of detectors for creating a large number of training datasets and corresponding trained MLMs which in turn may be used for predicting and studying air pollution over areas that may include a large number of emission and immission locations of interest. The possible use of a relatively small number of detectors for the creation of a large number of trained MLMs related to a large number of immission locations located closely to each other in a specific area, may in return advantageously allow for using said MLMs for predicting with a high spatial accuracy the possible particle immission across said area. It is noted that in the present text, the aforementioned machine learning models, such as for example the M_{M}N_{N} MLM mentioned further above, which once trained may be used for predicting whether a particle emission at one location may result to a particle immission at another location, are also called "soft-sensors".

As described further above, the method of the first aspect of the invention involves the registering of the aforementioned meteorological conditions which comprise the wind speed, wind direction, relative humidity, temperature, dew point and pressure at the emission locations, as these particular meteorological conditions (parameters) may affect the path or distance travelled in the atmosphere by the emitted particles. It is noted that any of said meteorological conditions may optionally be provided by or taken from a respective weather database or service, e.g. a weather data service, or may preferably be measured as part of the method, so that advantageously the registered meteorological conditions are very specific to the emission locations and period of time of possible interest. Hence, in a preferred embodiment of the first aspect of the invention, the method further comprises measuring the meteorological conditions at each of the M locations during the period of time.

As mentioned further above, the M emission locations are within respective regions from which there is a possible emission of particles. It is noted that each of said regions may include one or more of the M emission locations. Also, preferably each of said emission locations may have one particle emission sources, and most preferably the emission locations are at, or at the vicinity of, one of said particle sources. Non-limiting examples of said particle emission sources are machines, factories, ports, production sites, construction sites, exhausts, chimneys or other technical installations which are capable of emitting particles. Most preferably each of the emission locations is as close as possible to a respective particle emission source that is located within the corresponding region (i.e. geographical region) within which the respective emission location is. It is also noted that optionally a particle emission source may be close to more than one emission locations in which corresponding detectors may be placed for measuring the particulate emission from the respective particle emission source.

In a preferred embodiment of the invention, the particles are PM10 particles. The detection of the possible arrival and impact of airborne PM10 particles at the immission locations may be particularly important for the purpose of studying and evaluating the air-pollution at said immission locations. PM10 particles when present in the atmosphere of a region are typically considered to contribute to the air-pollution of that region. The PM10 particles are particles with a diameter of 10 microns or less, and inhalation of these particles by humans or other leaving organisms may cause adverse health effects. Therefore, estimating the immission of airborne PM10 particles in a region may advantageously be useful for the purpose of protecting the environment and life in that region.

In a preferred embodiment which herein is referred to as "exemplary" embodiment of the first aspect of invention, the method further comprises the following steps for calibrating the corresponding detector which is used for taking the measurements at a corresponding one of the emission or immission locations: at the corresponding emission or immission location where the corresponding detector is located, said corresponding detector being a first detector of a first type, additionally placing a second detector of a second type; during an initial period of time, at the corresponding emission or immission location where the first and second detectors are located taking with the first detector a first set of measurements, and taking with the second detector a second set of measurements; registering the environmental conditions occurring at the corresponding emission or immission location during the initial period of time; for the first detector forming a corresponding calibration training dataset using data related to the registered environmental conditions and the measurements taken with the first detector and the second detector at the corresponding emission or immission location during the initial period of time; for the first detector training via computing means a corresponding calibration machine learning model using the corresponding calibration training dataset, wherein the corresponding calibration machine learning model is configured to receive as input data related to the environmental conditions and the measurements taken with the first detector at the corresponding emission or immission location, and provide as output data related to estimated calibrated values of the measurements taken with the first detector. It is noted that the measurements which are taken by the first detector and may be provided as part of the input of the calibration machine learning model, may be called "raw measurements" of the first detector. From the above it may be understood that the calibration machine learning model once trained may advantageously provide calibrated values of the measurements taken with the first detector, and said calibrated values may be more accurate compared to values of the corresponding raw measurements of the first detector. Hence, in some preferred embodiments which are according to the aforementioned exemplary embodiment, said calibrated values are used instead of the raw measurements of the first detector for the purpose of forming the training datasets which are used for forming (creating) the soft-sensors i.e. for training the MLMs which are usable for predicting particle emission. The measurements taken by the first detector and/or the second detector may be affected by the meteorological conditions at the time of the measurements, and for this reason it is advantageous to take into account said meteorological conditions for the purpose of forming the aforementioned calibration dataset. Also, in some preferred embodiments which are according to the aforementioned exemplary embodiment, and where the first sensor is the corresponding sensor used at a corresponding emission location, the calibrated values provided by the respective calibration machine learning model may be used instead of the first detector's raw measurements as part of the input data that are provided to a respective soft-sensor. In the latter case, said input data may be provided to said respective soft-sensor for using the latter for predicting whether a particle emission from the soft-sensor's corresponding emission location results to an impact of particles at the soft-sensor's corresponding immission location.

The exemplary embodiment which is mentioned further above may advantageously allow for reducing the cost and technical complexity of the detectors that may be used for estimating particle immission. The physical detectors that may be used in the emission locations and/or the immission locations for forming the training datasets which are subsequently used for forming the soft-sensors according to the first aspect of the invention, and/or the detectors that are used in the emission locations for performing the measurements which can be fed to the soft-sensors so that the latter may provide an estimation of whether there is particle immission (impact) at the immission locations, may be detectors of the first type which may be calibrated according to the aforementioned exemplary embodiment using detectors of the second type. Preferably said detectors of the second type are of higher quality and accuracy compared to the detectors of the first type, wherein said higher quality and higher accuracy is preferably defined according to reference air quality measurement methods described in the Ambient Air Quality Directive 2008/50/EC, or in the "List of Designated Reference and Equivalent Methods" (Issue Date: June 15, 2024) of the EPA (United States Environmental Protection Agency). In the latter case, although said detectors of the second type may be more expensive compared to the detectors of the first type, advantageously the detectors of the second type may no longer be required after the calibration of the detectors of the first type is completed. This may be particularly useful for reducing the overall cost related to predicting particulate emissions with high accuracy, especially in cases involving a large number of soft-sensors. Hence, in a preferred embodiment which is according to the aforementioned exemplary embodiment, the second detector of the second type is of higher quality or measurement accuracy compared to the first detector of the first type.

In a preferred embodiment of the first aspect of the invention, forming at least one of the training datasets comprises deleting parts from the corresponding data which are used for forming the at least one training dataset, wherein the deleted parts are related to measuring via the corresponding detector at the corresponding immission location at least one apparent immission of particles, and measuring via the corresponding detector at the corresponding emission location that at the latter there is no emission corresponding to the at least one apparent immission. It may be understood that in the latter embodiment the corresponding immission location and the corresponding emission location are the locations related, i.e. corresponding, to the at least one training dataset for which parts of the corresponding data are deleted. It may also be understood that in the latter embodiment the aforementioned deleted parts of the data may likely correspond to a false positive detection of one or more immission events. Said false positive detection may be caused either from the impact at the corresponding immission location of particles which did not originate from the corresponding emission location, or from an erroneous function of the corresponding detector at the corresponding immission location during the measurements which are used for forming the deleted part of the data. Deleting said data may allow for avoiding taking into account false positive immission events in the training data which are used for training the machine learning models which once trained become the soft-sensors. Hence, the aforementioned optional deletion of the aforementioned part of the data may advantageously allow for improving the quality of the soft-sensors and of the predictions these soft-sensors may provide.

In a preferred embodiment of the first aspect of the invention, when the corresponding data which are used for forming at least one of the training datasets are not temporally homogenized, forming the at least one of the training datasets comprises applying a temporal homogenization of said corresponding data. This temporal homogenization may advantageously allow for improving the quality of the at least one training dataset via ensuring a correct correspondence between the measurements at the corresponding at least one emission location and the measurements at the corresponding at least one immission location related to the at least one training dataset. Hence, said optional temporal homogenization may advantageously contribute to the optimization of the corresponding at least one soft-sensor that may be formed via the use of said at least one training dataset for which the temporal homogenization may be applied.

In a preferred embodiment of the first aspect of the invention, the method further comprises labeling each of the generated training datasets, wherein said labeling comprises assigning a value of 1 to each of the measurements which are taken at the N immission locations and are above a threshold value, and assigning a value of 0 to each of the measurements which are taken at the N immission locations and are below the threshold value. Said labeling may advantageously facilitate the formation of soft-sensors (i.e. trained MLMs) which may provide accurate estimations as to whether there is impact/immission of particles at the immission locations or not. Given some information regarding a possible particle emission at a particular emission location and a set of atmospheric conditions in said particular emission location, predicting the possible particle immission in terms of a simple YES or NO, wherein YES signifies the likely occurrence of an immission or impact of the particles, and NO signifies that likely no immission or impact of the particles will occur, may be particularly useful in the preferable case that the particles are PM10 particles. Due to the possible toxicity of PM10 particles to humans and other leaving organisms, it may be very useful to predict whether PM10 particles emitted from one location will arrive to another location or not, especially when the latter location is populated. Predicting whether the emission of particles from a particle emission source under some known meteorological conditions will result or not to the arrival of the particles at a given immission location, may advantageously allow for taking action for postponing, modifying or stopping the activity or operation of the particle emission source, such that the impact of the particles at the immission location is reduced or avoided.

In a preferred embodiment of the first aspect of the invention, the method further comprises: applying an oversampling technique to generate synthetic data, preferably the oversampling technique being a synthetic minority oversampling technique; and using the generated synthetic data when forming one or more of the training datasets. The aforementioned step of applying an oversampling technique may advantageously be useful to be applied in cases where the data produced by the measurements taken with the sensors at the M emission locations and the N immission locations are imbalanced. Typically, imbalance in a dataset within a classification system refers to an unequal distribution of the values of the variable to be predicted. For datasets produced via the use of measurements taken by detectors at the emission and immission locations, it may occur, at least in some cases, that the number of true negatives events indicated by the measurements is considerably larger than the number of true positives indicated by the measurements. It is noted that the term "true negative event" refers to an event related to a combination of a particular emission location (e.g the aforementioned location M_{M}) and a particular immission location (e.g. the aforementioned location N_{N}), wherein in said true negative event the detector at the particular emission location does not detect the emission of particles, and the detector at the immission location does not detect the immission of particles. The latter event may be considered as being a "true negative" event because the absence of detected immission at the corresponding immission location may be attributed with a high degree of confidence to the absence of an emission at the corresponding emission location. Similarly, the term "true positive event" refers to an event related to a combination of a particular emission location (e.g. the aforementioned location M_{M}) and a particular immission location (e.g. the aforementioned location N_{N}), wherein in said event the detector at the particular emission location does detect the emission of particles, and the detector at the immission location does detect the immission of particles. The latter event may be considered as being a "true positive" because the detected immission at the corresponding immission location may be attributed with a high degree of confidence to the detected emission at the corresponding emission location. However, as mentioned further above, often, but not always, the number of true negative events that can be identified in a dataset that is based on the measurements taken by the detectors at the immission and emission locations, is considerably larger than the number of true positives, in which case the "true negative events" can be considered as being a majority class, and the "true positive events" may be considered the minority class. In the latter case, the dataset may be considered as being imbalanced, and its use for training a classification machine learning model (MLM) may, at least in some cases, lead the MLM to bias its responses towards the majority class. The aforementioned optional steps of applying an oversampling technique to generate synthetic data, preferably the oversampling technique being a Synthetic Minority Oversampling Technique (SMOTE), and using the generated synthetic data when forming one or more of the training datasets which are used for training the machine learning models for forming the soft-sensors (i.e. the trained MLMs), may advantageously lead to avoiding the aforementioned biasing in the responses that may be provided by the soft-sensors. It is noted that that the trained MLMs (i.e. soft-sensors) may act as classifiers because their possible function of predicting whether there will be immission of particles or not, can be considered as being as a type of classification function.

In a preferred embodiment of the first aspect of the invention, at least one of the machine learning models is any of a corresponding classifier, random forest algorithm, support vector machine, or one-class classifier, preferably the one-class classifier employing a one-class support vector machine algorithm or an isolation forest algorithm. The use of normal classifiers, random forest algorithms, or classical support vector machines as the machine learning models to be trained with the training datasets, may be particularly advantageous and lead to good quality predictions (e.g. predictions of high confidence) in the optional cases that an oversampling technique (e.g. a SMOTE or other oversampling technique) is applied for artificially increasing the sizes of the training datasets used for training the machine learning models, provided that the training datasets of the dataset that is finally formed comprises a sufficiently high number of the minority class events relatively to the majority class events. However, the use of one-class classifiers such as one-class support vector machine algorithms or isolation forest algorithms as the machine learning models to be trained with the training datasets, may be particularly advantageous and lead to good quality predictions in the optional case that no oversampling technique (e.g. a SMOTE or other oversampling technique) is applied and the training datasets are very small in size or comprise a relatively small number of the minority class events (compared to the majority class events). It is noted that the aforementioned optional method step of artificially increasing the respective sizes of the training datasets is preferably done via including in the training datasets the aforementioned synthetic data which can be produced via the application of the oversampling technique.

In a preferred embodiment of the first aspect of the invention, forming at least one of the training datasets comprises applying a normalization of the corresponding data which are used for forming the at least one training dataset. Said normalization of the corresponding data may advantageously promote that features possibly indicated by the data are on a comparable scale, which may generally result in better performance, stability, and faster training of machine learning models.

In a preferred embodiment of the first aspect of the invention, the method further comprises adjusting respective hyperparameters of one or more of the machine learning models before training said machine learning models. Said optional adjusting of the respective hyperparameters before training, may advantageously improve model performance, reduce overfitting, enhance generalization to unseen data, enable faster convergence and efficient training, and may also improve model stability.

In a preferred embodiment of the first aspect of the invention, the estimation of whether there will be immission of the particles at the corresponding immission location comprises an estimated value of a particle concentration or particle count at the corresponding immission location. Hence, optionally, a soft-sensor which may be created via the method of the first aspect of the invention, may be used for providing a prediction about the possible immission at a corresponding immission location of particles originating from a corresponding emission location/region/source, wherein said prediction is not necessarily a simple YES (i.e. there will be immission) or NO (i.e. there will not be emission), but may comprise or may have the form of an estimation of the value of the particle concentration or particle count or another parameter related to the particle concentration in the atmosphere/air of the corresponding immission location. In the latter optional case, the soft-sensor may provide the estimation of the value of the particle concentration or particle count or another parameter related to the particle concentration at the immission location, if some information or data regarding the particle emission and the meteorological conditions at the corresponding emission location is given as an input to the soft-sensor. It is noted that in the latter case that the trained machine learning models (soft-sensors) are configured to provide an estimation of the value of the particle concentration or particle count or another parameter related to particle concentration, then preferably said machine learning models are regressors.

The present invention in a second aspect concerns a system for estimating the immission of particles at at least one location, the system comprising a computing system and one or more sensors, wherein the one or more sensors are placeable at M emission locations which are at respective regions from where there is possible emission of particles into the atmosphere, and each of the one or more sensors when placed at a corresponding one of the emission locations is configured to measure whether there is emission of particles from the respective region at which the corresponding one emission location is; and wherein the computing system is configured to: receive as an input data related to meteorological conditions and the measurements by the one or more detectors at the corresponding emission locations, wherein the meteorological conditions comprise wind speed, a wind direction, a relative humidity, a temperature, a dew point and a pressure; execute MxN number of trained machine learning models which have been trained according to the method of the fist aspect of the invention, wherein each of the MxN machine learning models is associated with a corresponding one of the M emission locations and a corresponding one of N immission locations where there is possible immission of the particles, and said each of the MxN trained machine learning models is configured to receive as input the data related to the measurement of particles and the meteorological conditions at the corresponding emission location, and provide as output an estimation of whether there is immission of the particles at the corresponding immission location. Preferably the computing system comprises one or more computers. Also said computing system may be called computing means or computer system.

It may be understood that the system of the first aspect of the invention may be used for advantageously predicting whether the emission of particles from one or more particle emission sources located in corresponding regions, will result to the immission of particles at one or more immission locations. For this purpose, preferably each of the aforementioned emission locations is at, or as close as possible to, or at the vicinity of, a corresponding one of said particle emission sources. It may be further understood that the system of the second aspect of the invention may predict the possible immission of particles, via the use of machine learning models, i.e. soft-sensors, which have been trained via the method of the first aspect of the invention.

In a preferred embodiment of the second aspect of the invention, the system further comprises additional sensors placeable at the M emission locations for measuring one or more of the meteorological conditions at the M emission locations. In the latter case, the additional sensors may advantageously provide meteorological conditions which are specific to the exact emission locations and the time during which the possible particle emission measurements are taken by the respective sensors. It is noted that the aforementioned additional sensors for measuring the one or more meteorological conditions, may be called "meteorological sensors" while the sensors which are used for measuring whether there is particle emission or immission at an emission or immission location, respectively, may be called particle (particulate) detectors.

It may be understood that any optional or preferable features mentioned herein with respect to the first aspect of the invention, may correspond to respective optional or preferable features of the second aspect of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a flow diagram of a preferred embodiment of a method according to the first aspect of the invention.
Fig. 2 illustrates a flow diagram of a preferred embodiment of a method according to the first aspect of the invention.
Fig. 3 illustrates a flow diagram of a preferred embodiment of a method according to the first aspect of the invention.
Fig. 4 illustrates a flow diagram of a preferred embodiment of a method according to the first aspect of the invention.
Fig. 5 illustrates a flow diagram of a preferred embodiment of a method according to the first aspect of the invention.
Fig. 6 illustrates a flow diagram of a preferred embodiment of a method according to the first aspect of the invention.
Fig. 7 schematically illustrates an example of an implementation of a preferred embodiment of a method according to the first aspect of the invention.
Fig. 8 schematically illustrates a preferred embodiment of a system according to the second aspect of the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing embodiments according to the invention.

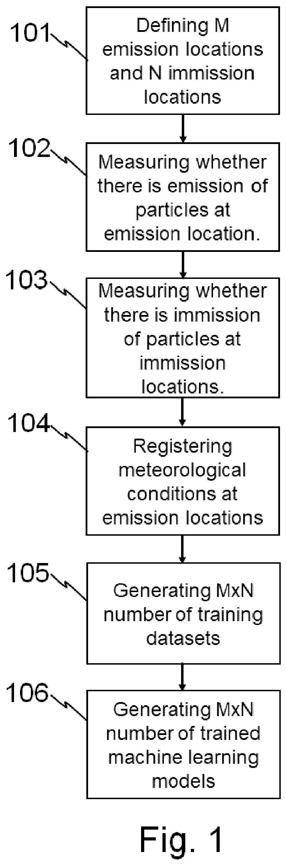

A preferred embodiment of a method according to the first aspect of the invention is explained next with reference to Fig. 1. In the preferred embodiment of Fig. 1, the method comprises steps 101-106. In step 101, there are defined M emission locations and N immission locations. It is noted that M and N are integers equal or greater than 1. Hence, there may be one or more emission locations, and there may be one or more immission locations. The emission locations are at respective regions from where there is possible emission of particles into the atmosphere. In each of the immission locations there is possible immission of the particles. In step 102 of the embodiment of Fig. 1, during a period of time the possible emission of particles from each of the regions in which the M emission locations are, is measured with a corresponding detector located at the corresponding emission location. Specifically, the corresponding detector in each of the emission locations is used for measuring whether there is an emission of particles from the respective region in which the detector is located during said period of time. In step 103 of the embodiment of Fig. 1, during the aforementioned period of time, the possible immission of the particles in each of the N immission locations is measured with a corresponding detector located at the corresponding emission location. Specifically, the corresponding detector in each of the immission locations is used for measuring whether there is an immission (i.e. arrival, impact or injection) of particles during said period of time. Hence, it may be understood that during i.e. within, said period of time, in each of the regions in which there are the emission locations there may or may not occur an emission of particles, and in each of the immission locations during the same period of time there may or may not occur an immission (i.e. arrival, injection or impact) of the particles which are possibly emitted from said regions.

Since there are M emission locations and N immission locations where each of M and N is a corresponding integer that is ≥1, it may be understood that in step 102 there are used one or more detectors, and in step 103 there are also used one or more detectors. The one or more detectors used in step 102 may be called emission detectors, and the one or more detectors used in step 103 may be called immission detectors. The emission detectors and the immission detectors are preferably configured to measure the concentration of the particles in the air/atmosphere. However, alternatively, especially in some preferred embodiments where the particles are PM10 particles, the emission and/or the immission detectors are for detecting the presence of the particles in the air/atmosphere. Also, in some preferred embodiments, the emission detectors and/or the immission detectors, are configured to measure particle concentration or a related quantity (e.g. particle count), and when the measured particle concentration or related quantity is above a certain threshold value, then the measurement may be considered as being that there is particle emission or immission, respectively, whereas when the measured particle concentration or related quantity is below the threshold value, then the measurement may be considered as being that there is no particle emission or immission. Also, the emission detectors may be of the same or of a different type compared to the immission detectors. In a non-limiting example, the emission and the immission detectors are configured to detect particles via laser diffraction spectrometry based on the diffraction of laser light by particles, wherein typically the intensity of the diffracted laser light is proportional to the number of particles, while the radius of a diffraction ring which is formed due to the diffraction is inversely proportional to the particle diameter.

In step 104 of the embodiment of Fig. 1, meteorological conditions which occur at each of the M emission locations during the period of time, are being registered. Said meteorological conditions comprise a wind speed, a wind direction, a relative humidity, a temperature, a dew point and a pressure. Optionally, additional meteorological conditions may be registered in step 104.

In step 105 of the embodiment of Fig. 1, there is generated, i.e. formed, a corresponding training dataset for each combination of anyone of the N immission locations and anyone of the M emission locations. Hence, the total number of training datasets which are generated/formed in step 105 is MxN. For example, if there are two emission locations (M=2) which are locations M₁ and M₂, and there are three immission locations (N=3) which are locations N₁, N₂, and N₃, then in step 105 there would be formed 6 datasets (because 2x3=6) which would be the following: a 1^{st} dataset for the combination of locations M₁ and N₁, a 2^{nd} dataset for the combination of locations M₁ and N₂, a 3^{rd} dataset for the combination of locations M₁ and N₃, a 4^{th} dataset for the combination of locations M₂ and N₁, a 5^{th} dataset for the combination of locations M₂ and N₂, and a 6^{th} dataset for the combination of locations M₂ and N₃. Each of the six training datasets formed in step 105, is being formed with the use of data which are related to the meteorological conditions which are registered in step 104 for the corresponding emission location, and the measurements taken with the emission and immission detectors in steps 102 and 103, respectively, for the corresponding emission and immission locations. For example, in relation to the aforementioned example concerning the optional case where there are 2 emission locations M₁ and M₂, and 3 immission locations N₁, N₂, and N₃, the 1^{st} training dataset for the combination of locations M₁ and N₁ would be formed with the use of data related to the registered meteorological conditions at the M₁ location, the measurements taken with the emission detector at the M₁ location, and the measurements taken with the immission detector at the N₁ location.

In step 106 of the embodiment of Fig. 1, for each one of the training datasets which have been generated in step 105, there is trained via computing means a corresponding machine learning model. The training of each of these machine leaning models is being done using the corresponding training dataset that is formed in step 105. Hence, since in step 105 the number of the generated datasets is MxN, in step 106 the number of the machine learning models which are generated is also MxN. Each of these MxN machine learning models which are trained in step 106 is configured to receive as input data related to the measurement of particles and the meteorological conditions at the corresponding emission location, and provide as output an estimation of whether there is immission of the particles at the corresponding immission location. It is also noted that these machine learning models once trained may also be called "soft-sensors". Hence, with respect to the example mentioned in the previous paragraph, the 1^{st} dataset (i.e. the dataset concerning the combination of locations M₁ and N₁) could be used in step 106 for the training of a corresponding machine learning model which concerns said combination of locations M₁ and N₁ and is configured to receive as an input data related to the meteorological conditions at M₁ and the measurements taken with the emission detector at M₁, and provide as output an estimation of whether there is emission of the particles at the immission location N₁. The latter model once trained could be called "soft-sensor M₁N₁", and could be advantageously used for predicting whether the atmospheric emission of particles from the corresponding region where the M₁ location is, would result to the emitted particles arriving and affecting the air quality at the N₁ location, provided that the atmospheric conditions at M₁ at the time of the particle emission are known.

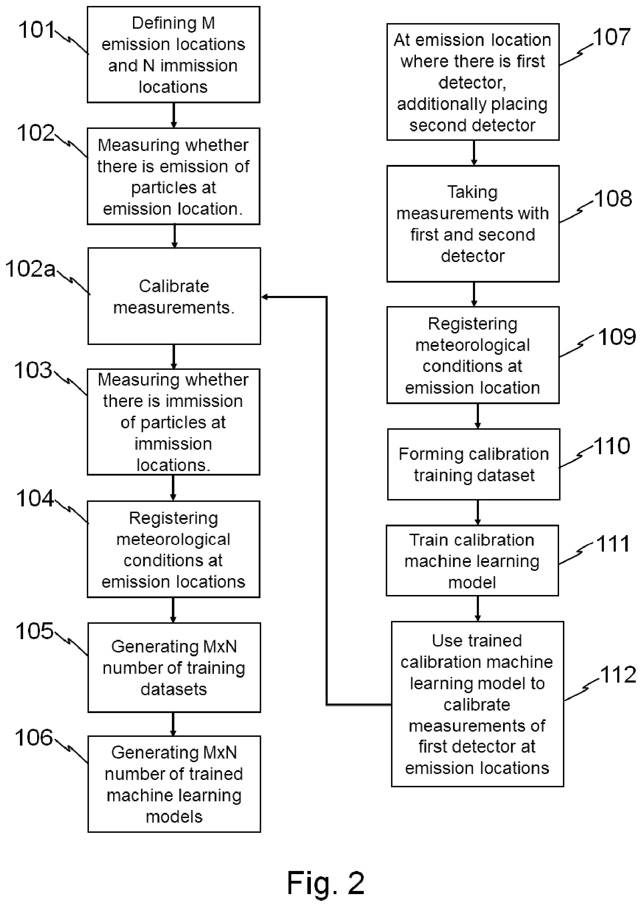

Another preferred embodiment of a method according to the first aspect of the invention is explained next with reference to Fig. 2. The embodiment of Fig. 2 is according to the one of Fig. 1, but also comprises step 102a in which the measurements taken in step 102 at a corresponding one of the emission locations are calibrated. For this purpose, the embodiment of Fig. 2 further comprises steps 107-112 which are as follows. In step 107, at the corresponding emission location where the corresponding emission detector is located, said corresponding emission detector being a first detector of a first type, a second detector of a second type is additionally placed. Then, in step 108, during an initial period of time, at the corresponding emission location where the first and second detectors are located, a first set of measurements is taken with (i.e. via) the first detector, and a second set of measurements is taken with the second detector. Also, in step 109, the environmental conditions that occur at the corresponding emission location during the initial period of time are registered. Then, in step 110, for the first detector, there is formed a corresponding calibration training dataset. For forming the latter (i.e. said calibration training dataset), there are used data related to the environmental conditions which are registered in step 109, and the measurements taken in step 108 with the first detector and the second detector at the corresponding emission location during the initial period of time. Then, in step 111, for the first detector there is trained via computing means a corresponding calibration machine learning model. The latter is trained using the corresponding calibration training dataset. The calibration machine learning model that is trained in step 111 is configured to receive as input data related to the environmental conditions and the measurements taken with the first detector at the corresponding emission location, and provide as output data related to estimated calibrated values of the measurements taken with the first detector. Then, in step 112, the trained machine learning model that is formed in step 111, is used for calibrating the measurements which are taken with the first detector in step 102, such that, in relation to said first detector for which the calibration is done, for the generation of the training datasets in step 105, the calibrated measurements produced in step 102a is used instead of the "raw" measurements taken in step 102. The aforementioned first detector of the first type, may optionally be of a lower-cost and/or lower quality compared to the second detector of the second type. It is noted that in other preferred embodiments of the method, steps similar to 102a and 107-112 may also or alternatively be applied for the calibration of the measurements taken in step 103 with one or more of the immission detectors.

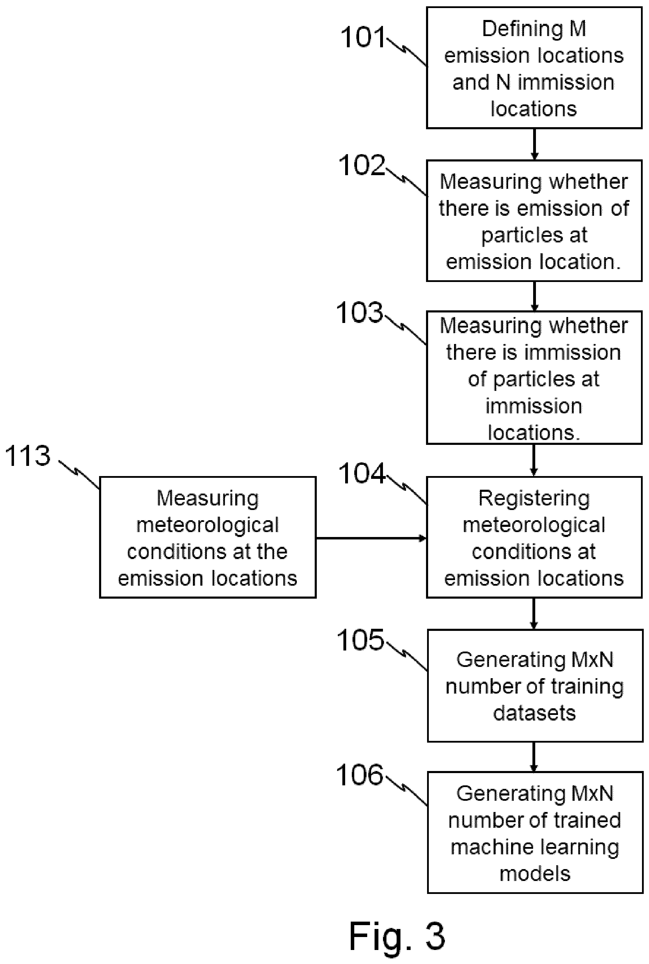

Another preferred embodiment of a method according to the first aspect of the invention is explained next with reference to Fig. 3. The embodiment of Fig. 3 is according to the one of Fig. 1, and further comprises step 113 in which there are measured one or more of the meteorological conditions which occur at each of the M emission locations during the period of time. In the embodiment of Fig. 3, the respective measurements taken in step 113 are registered in step 104.

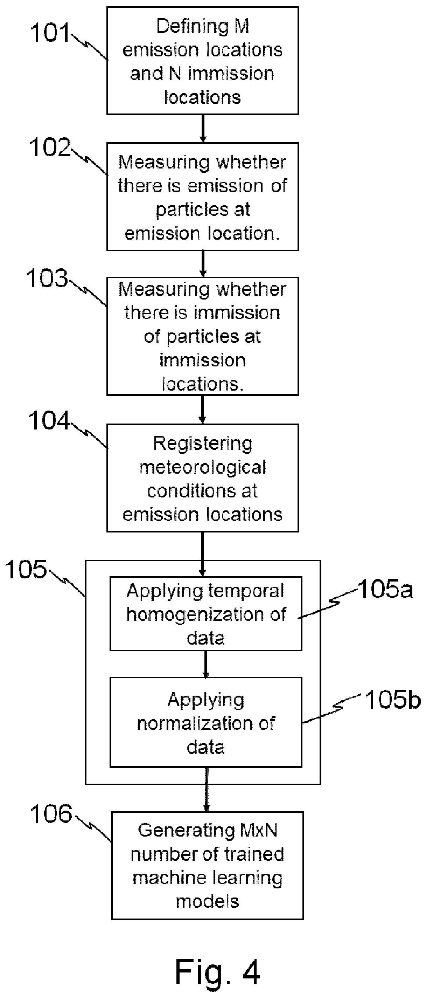

Another preferred embodiment of a method according to the first aspect of the invention is explained next with reference to Fig. 4. The embodiment of Fig. 4 is according to the one of Fig. 1, and the generation of training datasets in step 105 comprises a data processing which includes sub-steps 105a and 105b. In sub-step 105a, when the corresponding data which are used for forming at least one of the training datasets are not temporally homogenized, then forming the at least one of the training datasets comprises applying a temporal homogenization of said corresponding data. In sub-step 105b, forming at least one of the training datasets comprises applying a normalization of the corresponding data which are used for forming the at least one training dataset. In a non-limiting example concerning an optional case wherein the emission sensors and the immission sensors used at the emission and immission locations, respectively, are configured to take measurements of the concentration of the particles in the air, the aforementioned normalization step may be applied for normalizing the measured weather and emission concentration values.

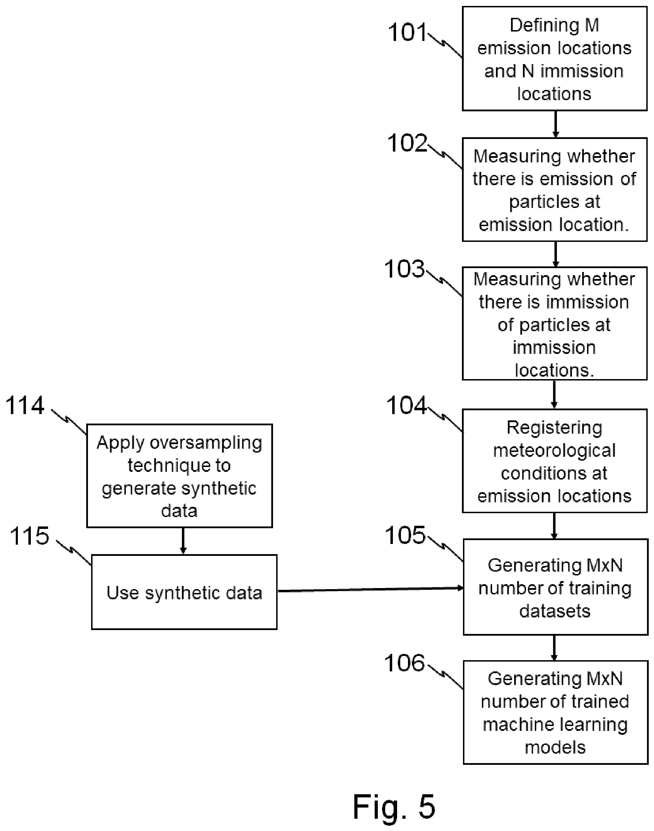

Another preferred embodiment of a method according to the first aspect of the invention is explained next with reference to Fig. 5. The embodiment of Fig. 5 is according to the one of Fig. 1. Moreover, in the embodiment of Fig. 5 the generation of the training datasets in step 105, not only involves the use of data related to the meteorological conditions registered in step 104 and the measurements taken in steps 102 and 103, but also involves the use of additional data which are synthetic data. These synthetic data, in the embodiment of Fig. 5, are being generated in step 114 via the application of an oversampling technique. These synthetic data, once generated, are used in step 115 for the purpose of forming the one or more training datasets. It is noted that said oversampling technique preferably is a synthetic minority oversampling technique.

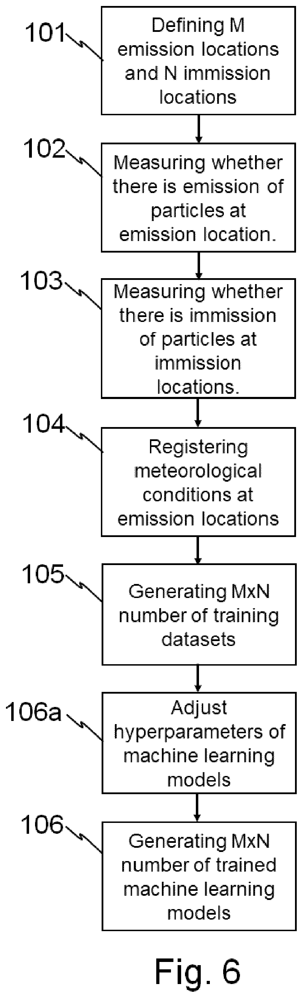

Another preferred embodiment of a method according to the first aspect of the invention is explained next with reference to Fig. 6. The embodiment of Fig. 6 is according to the one of Fig. 1, and additionally comprises step 106a wherein hyperparameters of one or more of the machine learning models which are to be trained in step 106 are adjusted before the application of step 106.

Also, another preferred embodiment of a method according to the first aspect of the invention comprises all the steps shown in Fig. 1-Fig. 6.

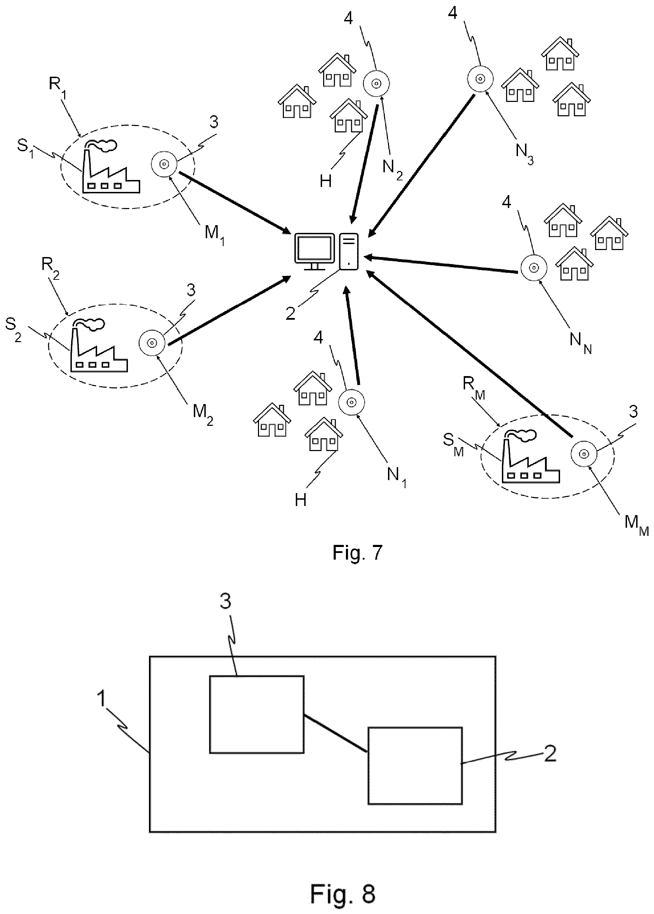

An example of the implementation of a preferred embodiment of the first aspect of the invention is explained next with reference to Fig. 7. In the example of Fig. 7, there are M particle emission sources denoted as S₁, S₂,..S_{M}. Each of said sources is a respective factory from which particles may be emitted to the atmosphere. Each of these emission sources S₁, S₂,..S_{M} is within a respective region R₁, R₂,...R_{M}, and the borders of the regions are indicated in Fig. 7 by truncated lines. Within each of the regions R₁, R₂,...R_{M}, there is a respective emission location M₁, M₂,..M_{M} at the vicinity of the corresponding emission source. Hence, the number of the emission locations is M. At each of the emission locations M₁, M₂,..M_{M} there is a corresponding emission detector 3. Also, in the example of Fig. 7 there are N emission locations denoted as N₁, N₂...N_{N}, and at each of the immission locations there is a corresponding immission detector 4. Each of the immission locations is at the vicinity of a corresponding set of houses H. Hence, the immission locations are at respective residential areas for which it is useful making a prediction regarding whether particles emitted from any of the emission sources S₁, S₂,..S_{M} will result to the impact/arrival/immission of the particles in any of the immission locations N₁, N₂...N_{N}. For facilitating the aforementioned prediction, the measurements taken by the emission detectors 3 and the immission detectors 4 over a period of time, are sent, as indicated by the thick arrows in Fig. 7, to a computing system 2 (computing means) which is a computer configured to receive these data. For this reason, it can be considered that the computing system 2 illustrated in Fig. 7 is connectable with the detectors 3, 4. The computing system 2 of the example shown in Fig. 7 is further configured to receive and register the meteorological conditions that occur at each the regions R1, R2... RM when the measurements in these regions are taken with the emission detectors 3. For this purpose, the computing system 2 may receive the meteorological conditions from a meteorological database or from weather sensors located at the M locations. Also, in the example of Fig. 7 the computing system 2 may be used for the formation of an MxN number of training datasets via the use of the registered meteorological conditions and the measurements received from the emission sensors 3 and the immission sensors 4. Finally, in the example of Fig. 7 the computing system 2 may be also used for using the MxN training datasets for forming an MxN number of soft-sensors. It is noted that the computing system 2 of Fig. 7 may comprise one or more computers.

A preferred embodiment of a system according to the second aspect of the invention is explained next with reference to Fig. 8. Fig. 8 illustrates a block diagram of an embodiment of a system 1 which may be used for estimating the immission of particles in at least one location. The system of Fig. 8 comprises a computer system 2 and one or more emission sensors 3. The one or more sensors 3 of the embodiment of Fig. 8 are placeable at M emission locations which are at respective regions from where there is possible emission of particles into the atmosphere, and each of the one or more sensors when placed at a corresponding one of the emission locations is configured to measure whether there is emission of particles from the respective region at which the corresponding one emission location is. The computing system 2 of the embodiment of Fig.8 is configured to perform the following functions: receive as an input data related to meteorological conditions and the measurements by the one or more detectors at the corresponding emission locations, wherein the meteorological conditions comprise wind speed, a wind direction, a relative humidity, a temperature, a dew point and a pressure; execute MxN number of trained machine learning models which have been trained according to the method of the first aspect of the invention, wherein each of the MxN machine learning models is associated with a corresponding one of the M emission locations and a corresponding one of N immission locations where there is possible immission of the particles, and the each of the MxN trained machine learning models is configured to receive as input the data related to the measurement of particles and the meteorological conditions at the corresponding emission location, and provide as output an estimation of whether there is immission of the particles at the corresponding immission location.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Method for training at least one machine learning model that is usable for estimating the immission of particles at at least one location, comprising:
defining M emission locations at respective regions from where there is possible emission of particles into the atmosphere, and N immission locations where there is possible immission of the particles, wherein each of M and N is a corresponding integer equal or greater than 1;
during a period of time, in each of the M emission locations measuring with a corresponding detector located at the corresponding location whether there is emission of the particles from the respective region;
during the period of time, in each of the N immission locations measuring with a corresponding detector located at the corresponding location whether there is immission of the particles;
registering meteorological conditions occurring at each of the M emission locations during the period of time, wherein the meteorological conditions comprise a wind speed, a wind direction, a relative humidity, a temperature, a dew point and a pressure;
for each combination of anyone of the N immission locations and anyone of the M emission locations forming a corresponding training dataset using data related to the registered meteorological conditions at the corresponding emission location and the measurements taken at the emission and immission locations of the corresponding combination, thereby generating a MxN number of training datasets;
for each one of the generated datasets training via computing means a corresponding machine learning model using the corresponding training dataset, thereby generating a MxN number of trained machine learning models, wherein each of the machine learning models is configured to receive as input data related to the measurement of particles and the meteorological conditions at the corresponding emission location, and provide as output an estimation of whether there is immission of the particles at the corresponding immission location.

2. Method according to claim 1, wherein the particles are PM10 particles.

3. Method according to any of the preceding claims, further comprising the following steps for calibrating the corresponding detector which is used for taking the measurements at a corresponding one of the emission or immission locations:
at the corresponding emission or immission location where the corresponding detector is located, said corresponding detector being a first detector of a first type, additionally placing a second detector of a second type;
during an initial period of time, at the corresponding emission or immission location where the first and second detectors are located taking with the first detector a first set of measurements, and taking with the second detector a second set of measurements;
registering the environmental conditions occurring at the corresponding emission or immission location during the initial period of time;
for the first detector forming a corresponding calibration training dataset using data related to the registered environmental conditions and the measurements taken with the first detector and the second detector at the corresponding emission or immission location during the initial period of time;
for the first detector training via computing means a corresponding calibration machine learning model using the corresponding calibration training dataset, wherein the corresponding calibration machine learning model is configured to receive as input data related to the environmental conditions and the measurements taken with the first detector at the corresponding emission or immission location, and provide as output data related to estimated calibrated values of the measurements taken with the first detector.

4. A method according to claim 3, wherein the second detector of the second type is of higher quality or measurement accuracy compared to the first detector of the fist type.

5. A method according to any of the preceding claims, wherein forming at least one of the training datasets comprises deleting parts from the corresponding data which are used for forming the at least one training dataset, wherein the deleted parts are related to measuring via the corresponding detector at the corresponding N location at least one apparent immission of particles, and measuring via the corresponding detector at the corresponding M location that at the latter there is no emission corresponding to the at least one apparent immission.

6. A method according to any of the preceding claims, wherein when the corresponding data which are used for forming at least one of the training datasets are not temporally homogenized, forming the at least one of the training datasets comprises applying a temporal homogenization of said corresponding data.

7. A method according to any of the preceding claims, further comprising labeling each of the generated training datasets, wherein said labeling comprises assigning a value of 1 to each of the measurements which are taken at the N immission locations and are above a threshold value, and assigning a value of 0 to each of the measurements which are taken at the N immission locations and are below the threshold value.

8. A method according to any of the preceding claims, further comprising:
applying an oversampling technique to generate synthetic data, preferably the oversampling technique being a synthetic minority oversampling technique;
using the generated synthetic data when forming one or more of the training datasets.

9. A method according to any of the preceding claims, wherein at least one of the machine learning models is any of a corresponding classifier, random forest algorithm, support vector machine, or one-class classifier, preferably the one-class classifier employing a one-class support vector machine algorithm or an isolation forest algorithm.

10. A method according to any of the preceding claims, wherein forming at least one of the training datasets comprises applying a normalization of the corresponding data which are used for forming the at least one training dataset.

11. A method according to any of the preceding claims, further comprising adjusting respective hyperparameters of one or more of the machine learning models before training the machine learning models.

12. A method according to any of the preceding claims, further comprising measuring the meteorological conditions at each of the M emission locations during the period of time.

13. A method according to any of the preceding claims, wherein the estimation of whether there is immission of the particles at the corresponding immission location comprises an estimated value of a particle concentration or particle count at the corresponding immission location.

14. A system for estimating the immission of particles at at least one location, the system comprising a computing system and one or more sensors, wherein the one or more sensors are placeable at M emission locations which are at respective regions from where there is possible emission of particles into the atmosphere, and each of the one or more sensors when placed at a corresponding one of the emission locations is configured to measure whether there is emission of particles from the respective region at which the corresponding one emission location is;
and wherein the computing system is configured to:
receive as an input data related to meteorological conditions and the measurements by the one or more detectors at the corresponding emission locations, wherein the meteorological conditions comprise wind speed, a wind direction, a relative humidity, a temperature, a dew point and a pressure;
execute MxN number of trained machine learning models which have been trained according to the method of any of claims 1-13, wherein each of the MxN machine learning models is associated with a corresponding one of the M emission locations and a corresponding one of N immission locations where there is possible immission of the particles, and the each of the MxN trained machine learning models is configured to receive as input the data related to the measurement of particles and the meteorological conditions at the corresponding emission location, and provide as output an estimation of whether there is immission of the particles at the corresponding immission location.

15. A system according to claim 14, further comprising additional sensors placeable at the M emission locations for measuring one or more of the meteorological conditions at the M emission locations.

## Patentansprüche

1. Verfahren zum Trainieren mindestens eines Maschinenlernmodells, das zum Schätzen der Immission von Partikeln an mindestens einem Standort verwendbar ist, umfassend:
Definieren von M Emissionsorten an jeweiligen Regionen, von wo es mögliche Emission von Partikeln in die Atmosphäre gibt, und von N Immissionsorten, wo es mögliche Immission der Partikel gibt, wobei jedes von M und N eine entsprechende ganze Zahl gleich oder größer als 1 ist;
während eines Zeitraums, Messen an jedem der M Emissionsorte mit einem entsprechenden Detektor, der sich an dem entsprechenden Standort befindet, ob es Emission der Partikel aus der jeweiligen Region gibt;
während des Zeitraums, Messen an jedem der N Immissionsorte mit einem entsprechenden Detektor, der sich an dem entsprechenden Standort befindet, ob es Immission der Partikel gibt;
Registrieren meteorologischer Bedingungen, die an jedem der M Emissionsorte während des Zeitraums auftreten, wobei die meteorologischen Bedingungen eine Windgeschwindigkeit, eine Windrichtung, eine relative Feuchtigkeit, eine Temperatur, einen Taupunkt und einen Druck umfassen;
für jede Kombination eines beliebigen der N Immissionsorte und eines beliebigen der M Emissionsorte, Bilden eines entsprechenden Trainingsdatensatzes unter Verwendung von Daten, die sich auf die registrierten meteorologischen Bedingungen an dem entsprechenden Emissionsort und die Messungen beziehen, die an den Emission- und Immissionsorten der entsprechenden Kombination vorgenommen wurden, wodurch eine MxN Anzahl von Trainingsdatensätzen erzeugt wird;
für jeden der erzeugten Datensätze, Trainieren eines entsprechenden Maschinenlernmodells über Rechenmittel unter Verwendung des entsprechenden Trainingsdatensatzes, wodurch eine MxN Anzahl von trainierten Maschinenlernmodellen erzeugt wird, wobei jedes der Maschinenlernmodelle konfiguriert ist, um als Eingabe Daten zu empfangen, die sich auf die Messung von Partikeln und die meteorologischen Bedingungen an dem entsprechenden Emissionsort beziehen, und als Ausgabe eine Schätzung bereitzustellen, ob es Immission der Partikel an dem entsprechenden Immissionsort gibt.

2. Verfahren nach Anspruch 1, wobei die Partikel PM10-Partikel sind.

3. Verfahren nach einem der vorhergehenden Ansprüche, ferner umfassend die folgenden Schritte zum Kalibrieren des entsprechenden Detektors, der zum Vornehmen der Messungen an einem der entsprechenden Emission- oder Immissionsorte verwendet wird:
an dem entsprechenden Emissions- oder Immissionsort, an dem sich der entsprechende Detektor befindet, wobei der entsprechende Detektor ein erster Detektor eines ersten Typs ist, zusätzliches Platzieren eines zweiten Detektors eines zweiten Typs;
während eines anfänglichen Zeitraums, Vornehmen eines ersten Satzes von Messungen mit dem ersten Detektor an dem entsprechenden Emissions- oder Immissionsort, an dem sich der erste und der zweite Detektor befinden, und Vornehmen eines zweiten Satzes von Messungen mit dem zweiten Detektor;
Registrieren der Umgebungsbedingungen, die an dem entsprechenden Emissions- oder Immissionsort während des anfänglichen Zeitraums auftreten;
für den ersten Detektor, Bilden eines entsprechenden Kalibrierungstrainingsdatensatzes unter Verwendung von Daten, die sich auf die registrierten Umgebungsbedingungen und die Messungen beziehen, die mit dem ersten Detektor und dem zweiten Detektor an dem entsprechenden Emissions- oder Immissionsort während des anfänglichen Zeitraums vorgenommen wurden;
für den ersten Detektor, Trainieren eines entsprechenden Kalibrierungsmaschinenlernmodells über Rechenmittel unter Verwendung des entsprechenden Kalibrierungstrainingsdatensatzes, wobei das entsprechende Kalibrierungsmaschinenlernmodell konfiguriert ist, um als Eingabe Daten zu empfangen, die sich auf die Umgebungsbedingungen und die Messungen beziehen, die mit dem ersten Detektor an dem entsprechenden Emissions- oder Immissionsort vorgenommen wurden, und als Ausgabe Daten bereitzustellen, die sich auf geschätzte kalibrierte Werte der Messungen beziehen, die mit dem ersten Detektor vorgenommen wurden.

4. Verfahren nach Anspruch 3, wobei der zweite Detektor des zweiten Typs eine höhere Qualität oder Messgenauigkeit im Vergleich zu dem ersten Detektor des ersten Typs aufweist.

5. Verfahren nach einem der vorhergehenden Ansprüche, wobei das Bilden mindestens eines der Trainingsdatensätze das Löschen von Teilen aus den entsprechenden Daten umfasst, die zum Bilden des mindestens einen Trainingsdatensatzes verwendet werden, wobei die gelöschten Teile sich auf das Messen mindestens einer scheinbaren Immission von Partikeln über den entsprechenden Detektor an dem entsprechenden N-Standort beziehen, und das Messen über den entsprechenden Detektor an dem entsprechenden M-Standort, dass an dem letzteren keine Emission vorhanden ist, die der mindestens einen scheinbaren Immission entspricht.

6. Verfahren nach einem der vorhergehenden Ansprüche, wobei, wenn die entsprechenden Daten, die zum Bilden mindestens eines der Trainingsdatensätze verwendet werden, nicht zeitlich homogenisiert sind, das Bilden des mindestens einen der Trainingsdatensätze das Anwenden einer zeitlichen Homogenisierung der entsprechenden Daten umfasst.

7. Verfahren nach einem der vorhergehenden Ansprüche, ferner umfassend das Kennzeichnen jedes der erzeugten Trainingsdatensätze, wobei das Kennzeichnen das Zuweisen eines Werts von 1 zu jeder der Messungen, die an den N Immissionsorten vorgenommen wurden und über einem Schwellenwert liegen, und das Zuweisen eines Werts von 0 zu jeder der Messungen, die an den N Immissionsorten vorgenommen wurden und unter dem Schwellenwert liegen, umfasst.

8. Verfahren nach einem der vorhergehenden Ansprüche, ferner umfassend:
Anwenden einer Oversampling-Technik, um synthetische Daten zu erzeugen, wobei die Oversampling-Technik vorzugsweise eine synthetische Minoritäts-Oversampling-Technik ist;
Verwenden der erzeugten synthetischen Daten beim Bilden eines oder mehrerer der Trainingsdatensätze.

9. Verfahren nach einem der vorhergehenden Ansprüche, wobei mindestens eines der Maschinenlernmodelle eines von einem entsprechenden Klassifikator, Random-Forest-Algorithmus, Support-Vector-Machine oder Ein-Klassen-Klassifikator ist, wobei der Ein-Klassen-Klassifikator vorzugsweise einen Ein-Klassen-Support-Vector-Maschinenalgorithmus oder einen Isolation-Forest-Algorithmus verwendet.

10. Verfahren nach einem der vorhergehenden Ansprüche, wobei das Bilden mindestens eines der Trainingsdatensätze das Anwenden einer Normalisierung der entsprechenden Daten umfasst, die zum Bilden des mindestens einen Trainingsdatensatzes verwendet werden.

11. Verfahren nach einem der vorhergehenden Ansprüche, ferner umfassend das Anpassen jeweiliger Hyperparameter eines oder mehrerer der Maschinenlernmodelle vor dem Trainieren der Maschinenlernmodelle.

12. Verfahren nach einem der vorhergehenden Ansprüche, ferner umfassend das Messen der meteorologischen Bedingungen an jedem der M Emissionsorte während des Zeitraums.

13. Verfahren nach einem der vorhergehenden Ansprüche, wobei die Schätzung, ob es eine Immission der Partikel an dem entsprechenden Immissionsort gibt, einen geschätzten Wert einer Partikelkonzentration oder Partikelanzahl an dem entsprechenden Immissionsort umfasst.

14. System zum Schätzen der Immission von Partikeln an mindestens einem Standort, wobei das System ein Rechensystem und einen oder mehrere Sensoren umfasst, wobei der eine oder die mehreren Sensoren an M Emissionsorten platzierbar sind, die sich an jeweiligen Regionen befinden, von wo es mögliche Emission von Partikeln in die Atmosphäre gibt, und jeder des einen oder der mehreren Sensoren, wenn er an einem entsprechenden der Emissionsorte platziert ist, konfiguriert ist, um zu messen, ob es Emission von Partikeln aus der jeweiligen Region gibt, an der sich der entsprechende eine Emissionsort befindet;
und wobei das Rechensystem konfiguriert ist, um:
als Eingabe Daten zu empfangen, die sich auf meteorologische Bedingungen und die Messungen durch den einen oder die mehreren Detektoren an den entsprechenden Emissionsorten beziehen, wobei die meteorologischen Bedingungen Windgeschwindigkeit, eine Windrichtung, eine relative Feuchtigkeit, eine Temperatur, einen Taupunkt und einen Druck umfassen;
eine MxN Anzahl von trainierten Maschinenlernmodellen auszuführen, die gemäß dem Verfahren nach einem der Ansprüche 1-13 trainiert wurden, wobei jedes der MxN Maschinenlernmodelle mit einem entsprechenden der M Emissionsorte und einem entsprechenden von N Immissionsorten assoziiert ist, wo es mögliche Immission der Partikel gibt, und jedes der MxN trainierten Maschinenlernmodelle konfiguriert ist, um als Eingabe die Daten zu empfangen, die sich auf die Messung von Partikeln und die meteorologischen Bedingungen an dem entsprechenden Emissionsort beziehen, und als Ausgabe eine Schätzung bereitzustellen, ob es Immission der Partikel an dem entsprechenden Immissionsort gibt.

15. System nach Anspruch 14, ferner umfassend zusätzliche Sensoren, die an den M Emissionsorten platzierbar sind, um eine oder mehrere der meteorologischen Bedingungen an den M Emissionsorten zu messen.

## Revendications

1. Procédé d'entraînement d'au moins un modèle d'apprentissage automatique utilisable pour estimer l'immission de particules en au moins un emplacement, comprenant les étapes consistant à :
définir M emplacements d'émission dans des régions respectives à partir desquelles une émission de particules dans l'atmosphère est possible, et N emplacements d'immission où une immission des particules est possible, M et N étant chacun un nombre entier correspondant supérieur ou égal à 1 ;
pendant une période de temps, dans chacun des M emplacements d'émission, mesurer au moyen d'un détecteur correspondant situé à l'emplacement correspondant s'il y a émission des particules depuis la région respective ;
pendant la période de temps, dans chacun des N emplacements d'immission, mesurer au moyen d'un détecteur correspondant situé à l'emplacement correspondant s'il y a immission des particules ;
enregistrer les conditions météorologiques se produisant à chacun des M emplacements d'émission pendant la période de temps, les conditions météorologiques comprenant une vitesse du vent, une direction du vent, une humidité relative, une température, un point de rosée et une pression ;
pour chaque combinaison de l'un quelconque des N emplacements d'immission et de l'un quelconque des M emplacements d'émission, former un ensemble de données d'entraînement correspondant en utilisant des données relatives aux conditions météorologiques enregistrées à l'emplacement d'émission correspondant et les mesures effectuées aux emplacements d'émission et d'immission de la combinaison correspondante, générant ainsi un nombre M×N d'ensembles de données d'entraînement ;
pour chacun des ensembles de données générés, entraîner, à l'aide de moyens de calcul, un modèle d'apprentissage automatique correspondant en utilisant l'ensemble de données d'entraînement correspondant, générant ainsi un nombre M×N de modèles d'apprentissage automatique entraînés, chacun des modèles d'apprentissage automatique étant configuré pour recevoir en entrée des données relatives à la mesure de particules et aux conditions météorologiques à l'emplacement d'émission correspondant, et pour fournir en sortie une estimation de l'existence ou non d'une immission des particules à l'emplacement d'immission correspondant.

2. Procédé selon la revendication 1, dans lequel les particules sont des particules PM10.

3. Procédé selon l'une quelconque des revendications précédentes, comprenant en outre les étapes suivantes de calibrage du détecteur correspondant qui est utilisé pour effectuer les mesures à un emplacement correspondant parmi les emplacements d'émission ou d'immission :
à l'emplacement d'émission ou d'immission correspondant où est situé le détecteur correspondant, ledit détecteur correspondant étant un premier détecteur d'un premier type, placer en outre un second détecteur d'un second type ;
pendant une période de temps initiale, à l'emplacement d'émission ou d'immission correspondant où sont situés le premier détecteur et le second détecteur, effectuer au moyen du premier détecteur un premier ensemble de mesures, et effectuer au moyen du second détecteur un second ensemble de mesures ;
enregistrer les conditions environnementales se produisant à l'emplacement d'émission ou d'immission correspondant pendant la période de temps initiale ;
pour le premier détecteur, former un ensemble de données d'entraînement de calibrage correspondant en utilisant des données relatives aux conditions environnementales enregistrées et aux mesures effectuées au moyen du premier détecteur et du second détecteur à l'emplacement d'émission ou d'immission correspondant pendant la période de temps initiale ;
pour le premier détecteur, entraîner, à l'aide de moyens de calcul, un modèle d'apprentissage automatique de calibrage correspondant en utilisant l'ensemble de données d'entraînement de calibrage correspondant, le modèle d'apprentissage automatique de calibrage correspondant étant configuré pour recevoir en entrée des données relatives aux conditions environnementales et aux mesures effectuées au moyen du premier détecteur à l'emplacement d'émission ou d'immission correspondant, et pour fournir en sortie des données relatives à des valeurs calibrées estimées des mesures effectuées au moyen du premier détecteur.

4. Procédé selon la revendication 3, dans lequel le second détecteur du second type est de qualité supérieure ou d'une précision de mesure supérieure par rapport au premier détecteur du premier type.

5. Procédé selon l'une quelconque des revendications précédentes, dans lequel l'étape consistant à former au moins un des ensembles de données d'entraînement comprend la suppression de parties des données correspondantes qui sont utilisées pour former ledit au moins un ensemble de données d'entraînement, les parties supprimées étant relatives à la mesure, au moyen du détecteur correspondant à l'emplacement N correspondant, d'au moins une immission apparente de particules, et à la mesure, au moyen du détecteur correspondant à l'emplacement M correspondant, de l'absence d'émission correspondant à ladite au moins une immission apparente.

6. Procédé selon l'une quelconque des revendications précédentes, dans lequel, lorsque les données correspondantes qui sont utilisées pour former au moins un des ensembles de données d'entraînement ne sont pas homogénéisées temporellement, l'étape consistant à former ledit au moins un des ensembles de données d'entraînement comprend l'application d'une homogénéisation temporelle desdites données correspondantes.

7. Procédé selon l'une quelconque des revendications précédentes, comprenant en outre l'étiquetage de chacun des ensembles de données d'entraînement générés, ledit étiquetage comprenant l'attribution d'une valeur de 1 à chacune des mesures qui sont effectuées aux N emplacements d'immission et qui sont supérieures à une valeur seuil, et l'attribution d'une valeur de 0 à chacune des mesures qui sont effectuées aux N emplacements d'immission et qui sont inférieures à la valeur seuil.

8. Procédé selon l'une quelconque des revendications précédentes, comprenant en outre les étapes consistant à :
appliquer une technique de suréchantillonnage pour générer des données synthétiques, la technique de suréchantillonnage étant de préférence une technique de suréchantillonnage synthétique de la classe minoritaire ;
utiliser les données synthétiques générées lors de l'étape consistant à former un ou plusieurs ensembles de données d'entraînement.

9. Procédé selon l'une quelconque des revendications précédentes, dans lequel au moins l'un des modèles d'apprentissage automatique est l'un quelconque parmi un classificateur correspondant, un algorithme des forêts d'arbres décisionnels, une machine à vecteurs de support, ou un classificateur à une classe, le classificateur à une classe mettant en œuvre de préférence un algorithme de machine à vecteurs de support à une classe ou un algorithme de forêt d'isolation.

10. Procédé selon l'une quelconque des revendications précédentes, dans lequel l'étape consistant à former au moins un des ensembles de données d'entraînement comprend l'application d'une normalisation des données correspondantes qui sont utilisées pour former ledit au moins un ensemble de données d'entraînement.

11. Procédé selon l'une quelconque des revendications précédentes, comprenant en outre l'ajustement des hyperparamètres respectifs d'un ou de plusieurs des modèles d'apprentissage automatique avant l'entraînement des modèles d'apprentissage automatique.

12. Procédé selon l'une quelconque des revendications précédentes, comprenant en outre la mesure des conditions météorologiques à chacun des M emplacements d'émission pendant la période de temps.

13. Procédé selon l'une quelconque des revendications précédentes, dans lequel l'estimation de l'existence ou non d'une immission des particules à l'emplacement d'immission correspondant comprend une valeur estimée de concentration de particules ou de nombre de particules à l'emplacement d'immission correspondant.

14. Système pour estimer l'immission de particules en au moins un emplacement, le système comprenant un système informatique et un ou plusieurs capteurs, le ou les capteurs pouvant être placés à M emplacements d'émission qui se trouvent dans des régions respectives à partir desquelles une émission de particules dans l'atmosphère est possible, et chacun du ou des capteurs, lorsqu'il est placé à un emplacement d'émission correspondant, est configuré pour mesurer s'il y a émission de particules depuis la région respective où se trouve ledit emplacement d'émission correspondant ; et
dans lequel le système informatique est configuré pour :
recevoir en entrée des données relatives aux conditions météorologiques et aux mesures effectuées par le ou les détecteurs aux emplacements d'émission correspondants, les conditions météorologiques comprenant une vitesse du vent, une direction du vent, une humidité relative, une température, un point de rosée et une pression ;
exécuter un nombre M×N de modèles d'apprentissage automatique entraînés qui ont été entraînés selon le procédé de l'une quelconque des revendications 1 à 13, chacun des M×N modèles d'apprentissage automatique étant associé à un emplacement correspondant parmi les M emplacements d'émission et à un emplacement correspondant parmi les N emplacements d'immission où une immission des particules est possible, et chacun des M×N modèles d'apprentissage automatique entraînés étant configuré pour recevoir en entrée les données relatives à la mesure de particules et aux conditions météorologiques à l'emplacement d'émission correspondant, et pour fournir en sortie une estimation de l'existence ou non d'une immission des particules à l'emplacement d'immission correspondant.

15. Système selon la revendication 14, comprenant en outre des capteurs supplémentaires pouvant être placés aux M emplacements d'émission afin de mesurer une ou plusieurs des conditions météorologiques aux M emplacements d'émission.
